# DEMANDE DE BREVET EUROPEEN

(11) **EP 3 591 480 A1**
(43) Date de publication de la demande: **08.01.2020**
(21) Numéro de dépôt: 19183127.0
(22) Date de dépôt: 28.06.2019
(51) Int. Cl.: G05B 19/042

(54) **ENSEMBLE DE GESTION DE VOL D'UN AÉRONEF ET PROCÉDÉ DE SURVEILLANCE D'UN TEL ENSEMBLE DE GESTION DE VOL**

(30) Priorité: 02.07.2018 FR 1856082
(71) Demandeur: AIRBUS OPERATIONS (S.A.S.), 31060 Toulouse (FR)
(72) Inventeur: MERE, Jean-Claude, 31060 TOULOUSE Cedex 9 (FR); RAYNAUD, Sylvain, 31060 TOULOUSE Cedex 9 (FR)
(74) Mandataire: Gicquel, Olivier Yves Gérard

(57) **Abrégé**

- Ensemble de gestion de vol d'un aéronef et procédé de surveillance d'un tel ensemble de gestion de vol.
- L'ensemble de gestion de vol (1) comporte deux systèmes de gestion de vol (2, 3) et une unité de surveillance et de sauvegarde (4), chacun desdits systèmes de gestion de vol (2, 3) étant configuré pour générer des données comprenant au moins une trajectoire et au moins une prédiction d'un paramètre de l'aéronef (AC), l'un (2) desdits systèmes de gestion de vol (2, 3) étant actif et l'autre (3) étant passif, l'unité de surveillance et de sauvegarde (4) étant, quant à elle, configurée pour réaliser au moins une surveillance d'au moins l'une des données générées par le système de gestion de vol (2) actif afin de vérifier si ladite donnée est valide, l'ensemble de gestion de vol (1) réalisant, en cas de validation de la donnée surveillée, une synchronisation de l'unité de surveillance et de sauvegarde (4) et du système de gestion de vol (3) passif, sur des données dites de synchronisation du système de gestion de vol (2) actif, à savoir un plan de vol et/ou une trajectoire de vol.

## Description

### DOMAINE TECHNIQUE

La présente invention concerne un ensemble de gestion de vol d'un aéronef, en particulier d'un avion de transport, et un procédé de surveillance d'un tel ensemble de gestion de vol.

### ETAT DE LA TECHNIQUE

La présente invention s'applique à un ensemble de gestion de vol comprenant deux systèmes de gestion de vol, de type FMS (« Flight Management System » en anglais).

Les équipements embarqués à bord d'un aéronef et notamment l'ensemble de gestion de vol doivent permettre d'atteindre le niveau de sécurité visé, en particulier si l'aéronef doit mettre en oeuvre des opérations à performances de navigation requises avec autorisation requise de type RNP AR (« Required Navigation Performance with Authorization Required » en anglais). Ces opérations RNP AR sont basées sur une navigation de surface de type RNAV (« aRea NAVigation » en anglais) et sur des opérations à performances de navigation requises de type RNP (« Required Navigation Performance » en anglais).

Or, pour qu'un aéronef ait la capacité de voler selon de telles procédures RNP AR, il est nécessaire notamment de pouvoir éliminer de la boucle de guidage une source erronée de calcul d'ordres (ou consignes) de guidage, afin de contrer ses éventuels effets sur la trajectoire de l'aéronef. Avec un ensemble de gestion de vol à deux systèmes de gestion de vol, en cas de désaccord entre les deux systèmes de gestion de vol, l'ensemble n'est pas capable d'identifier celui qui est défectueux, et l'aéronef ne peut donc plus être guidé en mode automatique et n'est pas en mesure de mettre en oeuvre de telles opérations RNP.

Dans un tel ensemble de gestion de vol à deux systèmes de gestion de vol, il est donc nécessaire de pouvoir mettre en oeuvre des traitements et/ou des vérifications permettant à l'aéronef d'utiliser des données intègres, pour remédier à l'inconvénient précité.

Le document FR3038709 divulgue un ensemble de gestion de vol d'aéronef comprenant une unité de surveillance et deux chaines de guidage pourvues chacune d'un système de gestion de vol indépendant. L'unité de surveillance est configurée pour réaliser une comparaison des consignes de roulis déterminée par une unité de génération de données et les systèmes de gestion de vol de manière à pouvoir détecter, identifier et invalider, le cas échéant, un système de gestion de vol défectueux parmi les deux systèmes de gestion de vol. Cette architecture est complexe.

### EXPOSÉ DE L'INVENTION

La présente invention a pour objet de remédier à cet inconvénient. Elle concerne un ensemble de gestion de vol d'un aéronef, ledit ensemble de gestion de vol comportant deux systèmes de gestion de vol, chacun desdits systèmes de gestion de vol étant configuré pour générer des données comprenant au moins une trajectoire et au moins une prédiction d'un paramètre de l'aéronef.

Selon l'invention, l'un desdits systèmes de gestion de vol est dit actif (ou maître) et l'autre est dit passif (ou esclave), l'ensemble de gestion de vol comporte, de plus, une unité de surveillance et de sauvegarde, cette unité de surveillance et de sauvegarde étant configurée pour réaliser au moins une surveillance d'au moins l'une des données générées par le système de gestion de vol actif afin de vérifier si ladite donnée est valide, et l'ensemble de gestion de vol est configuré pour réaliser, en cas de validation de la donnée surveillée, une synchronisation de l'unité de surveillance et de sauvegarde ainsi que du système de gestion de vol passif, sur des données dites de synchronisation (précisées ci-dessous) du système de gestion de vol actif.

Ainsi, grâce à cette architecture, l'unité de surveillance en réalisant une surveillance du système de gestion de vol actif (ou maître) est en mesure de valider des données (notamment à l'aide d'une base de données à intégrité augmentée, comme précisé ci-dessous), et en cas de validation, l'unité de surveillance et de sauvegarde et l'autre système de gestion de vol (passif ou esclave) sont synchronisés sur le système de gestion de vol actif, c'est-à-dire qu'ils reçoivent des données validées. Ainsi, les trois instances (les deux systèmes de gestion de vol et l'unité de surveillance et de sécurité) utilisent les mêmes données qui sont valides, en particulier pour calculer des ordres de guidage comme précisé ci-dessous, ce qui permet notamment à l'aéronef d'avoir la capacité de voler des opérations de type RNP telles que précitées, et de remédier à l'inconvénient précité.

De façon avantageuse, l'ensemble de gestion de vol comporte au moins une première base de données utilisée par les systèmes de gestion de vol pour calculer au moins certaines desdites données, et une seconde base de données utilisée par l'unité de surveillance et de sauvegarde pour réaliser la surveillance, ladite seconde base de données présentant une intégrité (de préférence de type DPAL1) plus importante que celle (de préférence de type DPAL2) de ladite première base de données.

De plus, avantageusement, le système de gestion de vol actif est configuré pour calculer une trajectoire latérale, en fonction au moins d'un plan de vol de référence et de données météorologiques (notamment des positions d'événements météorologiques), et l'unité de surveillance et de sauvegarde est configurée pour vérifier la validité de ladite trajectoire latérale, par rapport aux données météorologiques.

En outre, de façon avantageuse, le système de gestion de vol actif est configuré pour calculer une trajectoire verticale le long d'une trajectoire latérale et de données météorologiques, en fonction d'un profil d'altitudes de sécurité dépendant de la trajectoire latérale, et l'unité de surveillance et de sauvegarde est configurée pour vérifier la validité de ladite trajectoire verticale, par rapport à des données météorologiques (en particulier les positions d'événements météorologiques) et à un profil d'altitudes de sécurité extrait d'une base de données d'altitudes de sécurité.

Par ailleurs, avantageusement, le système de gestion de vol actif est configuré pour calculer une première prédiction de carburant à bord de l'aéronef, le long d'une trajectoire latérale et d'une trajectoire verticale validées, à partir de données issues d'une première base de données (de préférence de type DPAL2) l'unité de surveillance et de sauvegarde est configurée pour calculer une seconde prédiction de carburant à bord de l'aéronef, le long de ladite trajectoire latérale et de ladite trajectoire verticale validées, à partir de données issues d'une seconde base de données (de préférence de type DPAL1) et l'unité de surveillance et de sauvegarde est configurée pour vérifier la validité de ladite première prédiction de carburant à bord de l'aéronef, par rapport à ladite seconde prédiction de carburant à bord de l'aéronef.

En outre, de façon avantageuse, l'ensemble de gestion de vol est configuré pour réaliser une synchronisation de l'unité de surveillance et de sauvegarde ainsi que du système de gestion de vol sur au moins l'une des données de synchronisation suivantes du système de gestion de vol actif :
- un plan de vol ;
- une trajectoire latérale et une trajectoire verticale validées.

Par ailleurs, avantageusement, l'ensemble de gestion de vol comporte des moyens de commutation configurés pour, en cas de panne du système de gestion de vol actif ou en cas de détection par l'unité de surveillance et de sauvegarde d'une trajectoire de vol active non valide, générer une commutation consistant à rendre actif le système de gestion de vol passif et à rendre passif le système de gestion de vol actif.

En outre, dans un mode de réalisation particulier, les deux systèmes de gestion de vol sont hébergés dans des premier et deuxième équipements d'un même premier type, et l'unité de surveillance et de sauvegarde est hébergée dans un troisième équipement différent desdits premier et deuxième équipements, ledit troisième équipement étant d'un second type différent dudit premier type.

De plus, avantageusement, les deux systèmes de gestion de vol et l'unité de surveillance et de sauvegarde sont configurés pour déterminer, chacun, des ordres de guidage, lesdits ordres de guidage étant transmis à un système utilisateur.

Par ailleurs, de façon avantageuse, l'unité de surveillance et de sauvegarde est configurée pour pouvoir afficher une trajectoire dite de secours.

La présente invention concerne également un procédé de surveillance d'un ensemble de gestion de vol, tel que celui décrit ci-dessus, qui comporte deux systèmes de gestion de vol dont l'un est actif et l'autre est passif, et une unité de surveillance et de sauvegarde.

Selon l'invention, ledit procédé de surveillance comprend les étapes successives suivantes :
- une étape de génération de données comprenant au moins une trajectoire et au moins une prédiction d'un paramètre de l'aéronef, mise en oeuvre au moins par le système de gestion de vol qui est actif ;
- une étape de surveillance, mise en oeuvre par l'unité de surveillance et de sauvegarde, consistant à réaliser au moins une surveillance d'au moins l'une des données générées par le système de gestion de vol actif afin de vérifier si ladite donnée est valide ; et
- une étape de synchronisation consistant à réaliser, en cas de validation de la donnée surveillée, une synchronisation de l'unité de surveillance et de sauvegarde et du système de gestion de vol passif, sur des données dites de synchronisation du système de gestion de vol actif.

Avantageusement :
- l'étape de génération de données consiste à calculer une trajectoire latérale, en fonction au moins d'un plan de vol de référence et de données météorologiques ; et
- l'étape de surveillance consiste à vérifier la validité de ladite trajectoire latérale, par rapport aux données météorologiques.

De plus, de façon avantageuse :
- l'étape de génération de données consiste à calculer une trajectoire verticale le long d'une trajectoire latérale, en fonction d'un profil d'altitudes de sécurité dépendant de la trajectoire latérale et de données météorologiques ; et
- l'étape de surveillance consiste à vérifier la validité de ladite trajectoire verticale, par rapport à des données météorologiques et à un profil d'altitudes de sécurité extrait d'une base de données d'altitudes de sécurité.

En outre, avantageusement :
- l'étape de génération de données consiste à calculer une première prédiction de carburant à bord de l'aéronef, le long d'une trajectoire latérale et d'une trajectoire verticale validées, à partir de données issues d'une première base de données ; et
- l'étape de surveillance consiste vérifier la validité de ladite première prédiction de carburant à bord de l'aéronef, par rapport à une seconde prédiction de carburant à bord de l'aéronef, le long de ladite trajectoire latérale et de ladite trajectoire verticale validées, la seconde prédiction étant calculée à partir de données issues d'une seconde base de données.

La présente invention concerne également un aéronef, en particulier un avion de transport, qui est pourvu d'un ensemble de gestion de vol tel que celui spécifié ci-dessus.

### BRÈVE DESCRIPTION DES FIGURES

Les figures annexées feront bien comprendre comment l'invention peut être réalisée. Sur ces figures, des références identiques désignent des éléments semblables.
La figure 1 est le schéma synoptique d'un mode de réalisation particulier d'un ensemble de gestion de vol d'un aéronef.
La figure 2 montre un aéronef qui comporte un tel ensemble de gestion de vol.
La figure 3 montre schématiquement les étapes principales d'un mode de réalisation particulier d'un procédé de surveillance d'un ensemble de gestion de vol.

### DESCRIPTION DÉTAILLÉE

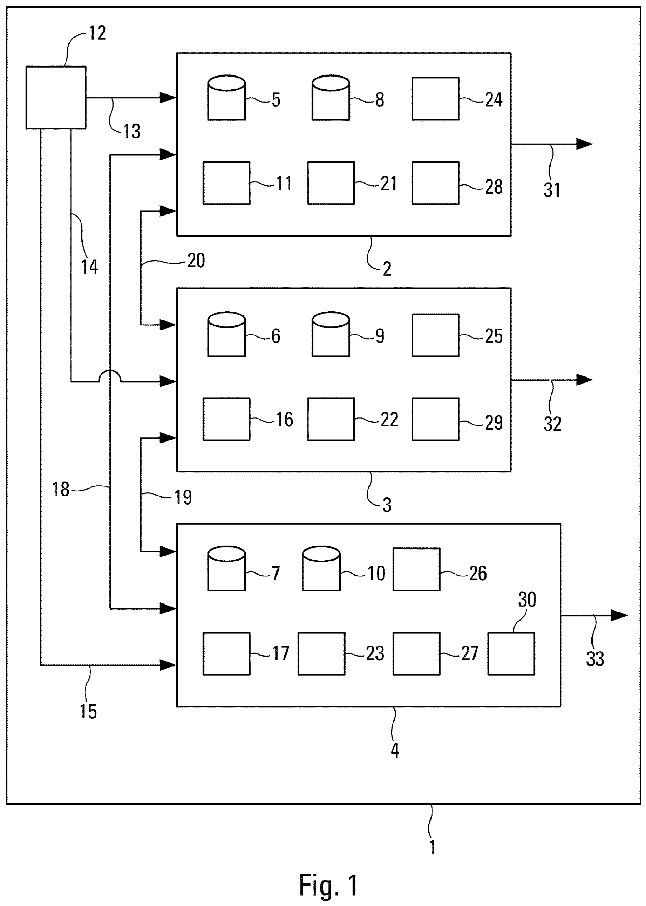

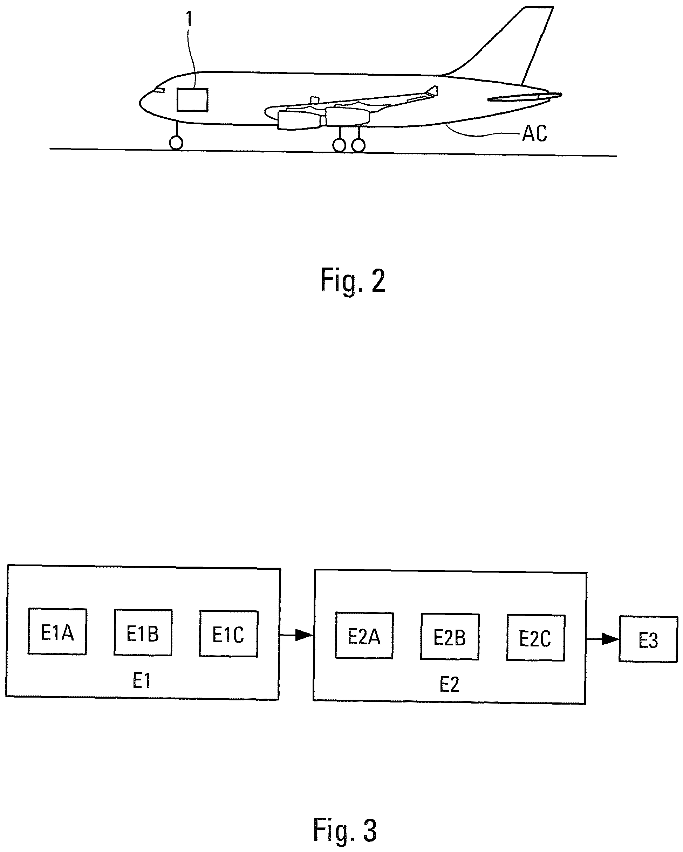

La figure 1 montre schématiquement un mode de réalisation particulier d'un ensemble de gestion de vol 1 d'un aéronef qui permet d'illustrer l'invention. Cet ensemble de gestion de vol 1 est embarqué sur l'aéronef AC, en particulier un avion de transport, comme représenté très schématiquement sur la figure 2.

L'ensemble de gestion de vol 1 comporte deux systèmes de gestion de vol 2 et 3 de type FMS (« Flight Management System » en anglais) chacun. Les deux systèmes de gestion de vol 2 et 3 sont indépendants et sont hébergés dans des équipements (« hardware » en anglais) différents, mais de même type. On entend par « même type » le fait de ne présenter aucune dissimilarité.

Chacun desdits systèmes de gestion de vol 2 et 3 comprend des éléments de calcul précisés ci-dessous, qui sont configurés pour réaliser des calculs notamment de consignes de guidage pour l'aéronef et de données comprenant au moins une trajectoire (de vol) et au moins une prédiction d'un paramètre de l'aéronef.

Selon l'invention, le système de gestion de vol 2 est actif (ou maître) et le système de gestion de vol 3 est passif (ou esclave). L'ensemble de gestion de vol 1 comporte, de plus, une unité de surveillance et de sauvegarde (ou de secours), nommée ci-après « unité de surveillance 4 ». A titre d'exemple non limitatif, l'unité de surveillance 4 est de type DALA (DAL pour « Design Assurance Level ») et les deux systèmes de gestion de vol 2 et 3 sont de type DALB.

L'unité de surveillance 4 est configurée pour réaliser au moins une surveillance d'au moins l'une des données générées par le système de gestion de vol 2 actif afin de vérifier si cette donnée est valide, comme précisé ci-dessous.

De plus, l'ensemble de gestion de vol 1 est configuré pour réaliser, en cas de validation par l'unité de surveillance 4 de la donnée surveillée, une synchronisation de l'unité de surveillance 4 ainsi que du système de gestion de vol 3 passif, sur des données dites de synchronisation du système de gestion de vol 2 actif, comme précisé ci-dessous.

L'unité de surveillance 4 est hébergée dans un équipement (« hardware » en anglais) qui est différent des équipements hébergeant les deux systèmes de gestion de vol 2 et 3. De plus, cet équipement hébergeant l'unité de surveillance 4 est d'un type différent du type (similaire) des deux équipements hébergeant les deux systèmes de gestion de vol 2 et 3.

L'ensemble de gestion de vol 1 comporte également :
- une base de données 5, de type DPAL2, comprenant des altitudes de sécurité qui sont utilisées par le système de gestion de vol 2 pour calculer au moins certaines desdites données, comme précisé ci-dessous ;
- une base de données 6, de type DPAL2, comprenant des altitudes de sécurité qui sont utilisées par le système de gestion de vol 3 pour calculer au moins certaines desdites données ; et
- une base de données 7, de type DPAL 1, comprenant des altitudes de sécurité qui sont utilisées par l'unité de surveillance 4 pour réaliser une surveillance.

L'ensemble de gestion de vol 1 comporte en outre :
- une base de données de prédiction 8, de type DPAL2, qui est utilisée par le système de gestion de vol 2 pour réaliser des prédictions, comme précisé ci-dessous ;
- une base de données de prédiction 9, de type DPAL2, qui est utilisée par le système de gestion de vol 3 pour réaliser des prédictions ; et
- une base de données de prédiction 10, de type DPAL1, qui est utilisée par l'unité de surveillance 4 pour réaliser également des prédictions en vue d'une surveillance.

Les bases de données 7 et 10 (de type DPAL1) utilisées par l'unité de surveillance 4 présentent donc une intégrité et des contraintes plus importantes que les bases de données 5, 6, 8 et 9 (de type DPAL2) utilisées par les systèmes de gestion de vol 2 et 3.

Sur l'exemple de la figure 1, les bases de données 5 à 10 sont représentées à l'intérieur des instances 2, 3 et 4. Elles peuvent également être agencées dans l'ensemble de gestion de vol 1, mais à l'extérieur desdites instances 2, 3 et 4 en étant toutefois reliées à ces dernières.

Le système de gestion de vol 2 actif comporte un élément de calcul 11 qui est configuré pour calculer de façon usuelle une trajectoire latérale (d'une trajectoire de vol de l'aéronef) dite active. La trajectoire latérale représente la partie de la trajectoire de vol (globale ou complète) de l'aéronef, située dans le plan horizontal. L'élément de calcul 11 calcule la trajectoire latérale, en fonction d'un plan de vol de référence, ainsi que de données météorologiques. Ledit plan de vol de référence est reçue et utilisée, de façon usuelle, par le système de gestion de vol 2. Quant aux données météorologiques, elles représentent les positions d'événements (ou de cellules) météorologiques dans le ciel. Ces données météorologiques sont issues d'une mémoire 12 usuelle contenant des données météorologiques. Dans l'exemple représenté, la mémoire 12 de type usuel est reliée par l'intermédiaire de liaisons 13, 14 et 15, respectivement, au système de gestion de vol 2, au système de gestion de vol 3 et à l'unité de surveillance 4.

De même, le système de gestion de vol 3 passif comporte également un élément de calcul 16 qui est configuré pour calculer de façon usuelle une trajectoire latérale (d'une trajectoire de vol de l'aéronef). L'élément de calcul 16 calcule la trajectoire latérale, également en fonction d'un plan de vol de référence et de données météorologiques issues de la mémoire 12.

L'unité de surveillance 4 comporte un élément de surveillance (ou de vérification) 17 qui est configuré pour vérifier la validité de la trajectoire latérale déterminée par le système de gestion de vol 2 actif et reçue de ce dernier, par rapport aux données météorologiques issues de la base de données 12. En particulier, elle vérifie que la trajectoire latérale ne traverse pas des cellules météorologiques, par exemple des cellules orageuses, susceptibles de perturber le vol. En cas de vérification concluante, l'unité de surveillance 4 valide la trajectoire latérale.

L'unité de surveillance 4 est reliée par l'intermédiaire de liaisons 18 et 19, respectivement, aux systèmes de gestion de vol 2 et 3, et les systèmes de gestion de vol 2 et 3 sont reliés ensemble par l'intermédiaire d'une liaison 20.

Par ailleurs, le système de gestion de vol 2 actif comporte un élément de calcul 21 qui est configuré pour calculer une trajectoire verticale (de la trajectoire de vol de l'aéronef) dite active le long de la trajectoire latérale active (calculée par l'élément de calcul 11). La trajectoire verticale représente la partie de la trajectoire de vol (complète ou globale) de l'aéronef, située dans le plan vertical. L'élément de calcul 21 calcule la trajectoire verticale en fonction d'un profil d'altitudes de sécurité, ainsi que de données météorologiques issues de la base de données 12. Ce profil d'altitudes de sécurité comporte un ensemble d'altitudes de sécurité, qui sont extraites de la base de données 5 et sont définies le long de la trajectoire latérale calculée par l'élément de calcul 11.

De même, le système de gestion de vol 3 passif comporte un élément de calcul 22 qui est configuré pour calculer une trajectoire verticale (de la trajectoire de vol de l'aéronef) le long de la trajectoire latérale (calculée par l'élément de calcul 16). L'élément de calcul 22 calcule la trajectoire verticale en fonction d'un profil d'altitudes de sécurité, ainsi que de données météorologiques issues de la base de données 12. Ce profil d'altitudes de sécurité est extrait de la base de données 6 en fonction de la trajectoire latérale calculée par l'élément de calcul 16.

L'unité de surveillance 4 comporte un élément de surveillance 23 qui est configuré pour vérifier la validité de la trajectoire verticale déterminée par le système de gestion de vol 2 actif et reçue de ce dernier, par rapport à des données météorologiques issues de la base de données 12 et à un profil d'altitudes de sécurité. Ce profil d'altitudes de sécurité est extrait de la base de données 7, en fonction de la trajectoire latérale calculée par l'élément de calcul 11 du système de gestion de vol 2 actif, qui a été fournie à l'unité de surveillance 4.

L'ensemble de gestion de vol 1 est configuré pour, en cas de validation par l'unité de surveillance 4 de la trajectoire de vol complète (comprenant la trajectoire latérale et la trajectoire verticale) générée par le système de gestion de vol 2 actif, réaliser une synchronisation de l'unité de surveillance 4 ainsi que du système de gestion de vol 3 passif, sur le plan de vol du système de gestion de vol 2 actif, ainsi que sur la trajectoire latérale et la trajectoire verticale (ainsi validées) du système de gestion de vol 2 actif. En d'autres termes, le plan de vol utilisé par le système de gestion de vol 2 actif et la trajectoire de vol complète (déterminée par le système de gestion de vol 2 actif et validée par l'unité de surveillance 4) sont transmis à l'unité de surveillance 4 et au système de gestion de vol 3 passif qui les utilisent dans les traitements et les calculs qui suivent. La trajectoire de vol (comprenant la trajectoire latérale et la trajectoire verticale) validée, reçue par l'unité de surveillance 4, est enregistrée par cette dernière dans une mémoire tampon (non représentée), en tant que trajectoire de secours (ou de sauvegarde).

Cette synchronisation (ou mise à jour) est réalisée à chaque nouvelle validation de la trajectoire de vol par l'unité de surveillance 4. Cette mise à jour peut être réalisée de façon périodique et/ou à chaque fois que survient un évènement modifiant une donnée utilisée dans les calculs.

Par ailleurs, le système de gestion de vol 2 actif comporte un élément de traitement 24 qui est configuré pour calculer une prédiction d'un paramètre de l'aéronef. Dans un mode de réalisation préféré, l'élément de traitement 24 calcule une prédiction EFOB1 du carburant disponible à bord de l'aéronef, le long de la trajectoire latérale et de la trajectoire verticale validées, à partir de données issues de la base de données de prédiction 8.

De même, le système de gestion de vol 3 passif comporte un élément de traitement 25 qui est configuré pour calculer une prédiction d'un paramètre de l'aéronef. Dans un mode de réalisation préféré, l'élément de traitement 24 calcule une prédiction EFOB2 du carburant disponible à bord de l'aéronef, le long de la trajectoire latérale et de la trajectoire verticale validées, à partir de données issues de la base de données de prédiction 9.

L'unité de surveillance 4 comporte également un élément de traitement 26 qui est configuré pour calculer une prédiction d'un paramètre de l'aéronef. Dans un mode de réalisation préféré, l'élément de traitement 24 calcule une prédiction EFOB3 du carburant disponible à bord de l'aéronef, le long de la trajectoire latérale et de la trajectoire verticale validée, à partir de données issues de la base de données de prédiction 10.

De plus, l'unité de surveillance 4 comporte un élément de surveillance (ou de vérification) 27 qui est configuré pour vérifier la validité de la prédiction EFOB1 de carburant à bord de l'aéronef (déterminée par le système de gestion de vol 2 actif à partir de données issues de la base de données 8), par rapport à la prédiction EFOB3 de carburant à bord de l'aéronef (déterminée par l'unité de surveillance 4 à partir de données issues de la base de données 10), et il valide cette prédiction EFOB1 si la différence entre les deux prédictions EFOB1 et EFOB3 est inférieure à une marge prédéterminée.

Par ailleurs l'ensemble de gestion de vol 1 comporte des moyens de commutation (non représentés) qui sont configurés pour générer une commutation, en cas de panne du système de gestion de vol 2 actif et/ou si l'unité de surveillance 4 a conclu que la trajectoire latérale active et/ou la trajectoire verticale active (déterminées par le système de gestion de vol 2) ne sont pas valides. Cette commutation consiste à rendre actif (ou maître) le système de gestion de vol 3 passif et à rendre passif (ou esclave) le système de gestion de vol 2 actif. Dans un mode de réalisation particulier, les moyens de commutation comprennent un bouton (non représenté) qui est installé dans le poste de pilotage et qui permet à un membre d'équipage de commander manuellement la commutation. En outre, dans une variante de réalisation, les moyens de commande comprennent au moins une unité de commande (faisant par exemple partie de l'unité de surveillance 4) qui réalise automatiquement la commutation lorsque les conditions pour la commutation sont remplies.

Les calculs du système de gestion de vol 3 passif (ou esclave) ne sont pas utilisés (notamment par l'unité de surveillance 4) tant que le système de gestion de vol 2 actif (ou maître) n'est pas en panne et que la trajectoire active est validée par l'unité de surveillance 4.

En revanche, en cas de panne du système de gestion de vol 2 actif ou si la trajectoire (de vol) active est déclarée non valide par l'unité de surveillance 4, l'état actif est ainsi commuté, via l'unité de surveillance 4, entre les deux systèmes de gestion de vol 2 et 3, et un nouveau jeu de vérifications ou de (surveillances) est mis en oeuvre par l'unité de surveillance 4. Ce nouveau jeu de vérifications est basé sur des calculs réalisés par des éléments de calcul (par exemple les éléments de calcul 16, 22 et 25) du système de gestion de vol 3.

Si ce second système de gestion de vol 3 est également en panne ou tombe en panne ou bien si le résultat de son calcul de trajectoire est déclaré non valide par l'unité de surveillance 4, la trajectoire (dite de secours) mémorisée dans l'unité de surveillance 4 n'est pas mise à jour, et la trajectoire de secours mémorisée en dernier est utilisée par exemple par un calculateur de guidage en vue du guidage de l'aéronef.

Dans un mode de réalisation particulier, l'ensemble de gestion de vol 1 est configuré pour, lors d'échanges d'informations entre différents éléments de l'ensemble de gestion de vol 1 et notamment entre les instances 2, 3 et 4, renvoyer les données reçues d'une source émettrice quelconque (par exemple l'une des instances 2, 3 et 4) à ladite source émettrice et comparer entre elles (au niveau de la source émettrice) les données émises et les données reçues et renvoyées. Ce mode de vérification permet de détecter une corruption durant la transmission d'informations entre les différents éléments ou instances de l'ensemble de gestion de vol 1.

Par ailleurs, les deux systèmes de gestion de vol 2 et 3 et l'unité de surveillance 4 comportent, chacun, un élément de calcul 28, 29, 30. Chacun de ces éléments de calcul 28, 29 et 30 est configuré pour déterminer de façon usuelle des ordres (ou consignes) de guidage à partir des trajectoires dont disposent les deux systèmes de gestion de vol 2 et 3 et l'unité de surveillance 4. Les ordres de guidage calculés par ces éléments de calcul 28, 29 et 30 sont transmis à au moins un système utilisateur (non représenté) et notamment à un calculateur de guidage de l'aéronef, respectivement par l'intermédiaire de liaisons 31, 32 et 33.

Par conséquent, les trois instances 2, 3 et 4 calculent leurs propres ordres de guidage et les envoient à la fois à des canaux de calcul COM et à des canaux de surveillance MON du ou des calculateurs de guidage de l'aéronef, qui en déduisent la valeur médiane et utilisent cette valeur médiane pour guider l'aéronef.

Le guidage de l'aéronef est donc réalisé selon des données (et notamment des ordres de guidage) fournies par les trois instances 2, 3 et 4 par l'intermédiaire des liaisons 31, 32 et 33.

Par ailleurs, l'unité de surveillance 4 est configurée pour pouvoir afficher une trajectoire dite de secours, sur une unité d'affichage usuelle (non représentée) qui reçoit par exemple la trajectoire de secours à afficher par l'intermédiaire de la liaison 33 de l'unité de surveillance 4.

L'ensemble de gestion de vol 1, tel que décrit ci-dessus, est apte à mettre en oeuvre un procédé de surveillance représenté schématiquement sur la figure 3.

Ce procédé de surveillance comprend, notamment, les principales étapes suivantes :
- une étape de génération de données E1 pour générer des données comprenant au moins une trajectoire et au moins une prédiction d'un paramètre de l'aéronef, mise en oeuvre par le système de gestion de vol 2 qui est actif ;
- une étape de surveillance E2, mise en oeuvre par l'unité de surveillance 4, consistant à réaliser au moins une surveillance d'au moins l'une des données générées par le système de gestion de vol 2 actif afin de vérifier si ladite donnée est valide ; et
- une étape de synchronisation E3 consistant à réaliser, en cas de validation de la donnée surveillée, une synchronisation de l'unité de surveillance 4 et du système de gestion de vol 3 passif, sur des données de synchronisation du système de gestion de vol 2 actif.

Selon une première caractéristique :
- l'étape de génération de données E1 comporte une sous-étape E1A consistant à calculer une trajectoire latérale, en fonction au moins d'un plan de vol de référence et de données météorologiques ; et
- l'étape de surveillance E2 comporte une sous-étape E2A consistant à vérifier la validité de ladite trajectoire latérale, par rapport aux données météorologiques.

Selon une deuxième caractéristique :
- l'étape de génération de données E1 comporte une sous-étape E1B consistant à calculer une trajectoire verticale le long d'une trajectoire latérale, en fonction d'un profil d'altitudes de sécurité dépendant de la trajectoire latérale et de données météorologiques ; et
- l'étape de surveillance E2 comporte une sous-étape E2B consistant à vérifier la validité de ladite trajectoire verticale, par rapport aux données météorologiques et à un profil d'altitudes de sécurité extrait de la base de données 7 d'altitudes de sécurité.

En outre, selon une troisième caractéristique :
- l'étape de génération de données E1 comporte une sous-étape auxiliaire E1C consistant à calculer une prédiction EFOB1 de carburant à bord de l'aéronef, le long d'une trajectoire latérale et d'une trajectoire verticale validées, à partir de données issues de la base de données de prédiction 8 ; et
- l'étape de surveillance E2 comporte une sous-étape E2C consistant à vérifier la validité de la prédiction EFOB1 de carburant à bord de l'aéronef, par rapport à une prédiction EFOB3 de carburant à bord de l'aéronef, le long de ladite trajectoire latérale et de ladite trajectoire verticale validées, calculée à partir de données issues de la base de données de prédiction 10.

On précise ci-après le fonctionnement de l'ensemble de gestion de vol 1, de façon plus détaillée, en présentant un exemple à la fois de calculs et de surveillances, successifs, en lien avec les étapes représentées sur la figure 3 :
E1A/ les systèmes de gestion de vol 2 et 3, actif et esclave, réalisent leurs propres calculs de la trajectoire latérale, conformément à la définition du plan de vol de référence et au mode de guidage actif courant, en tenant compte de la position d'événements météorologiques issus de la mémoire 12. Le système de gestion de vol 2 actif envoie la trajectoire latérale ainsi calculée à l'unité de surveillance 4 ;
E2A/ l'unité de surveillance 4 vérifie la validité de la trajectoire latérale, par rapport aux données météorologiques ;
E1B/ les systèmes de gestion de vol 2 et 3 extraient un profil d'altitudes de sécurité, sous la trajectoire latérale calculée, à partir des bases de données 5 et 6 (d'altitude de sécurités) spécifiques de type DPAL2. Ce profil d'altitudes de sécurité est utilisé pour calculer la trajectoire verticale adaptée au terrain. Les systèmes de gestion de vol 2 et 3, actif et esclave, construisent leur trajectoire verticale correspondant à leur propre trajectoire latérale, en prenant en compte des données météorologiques. Le système de gestion de vol 2 actif envoie sa trajectoire verticale à l'unité de surveillance 4 ;
E2B/ l'unité de surveillance 4 extrait un profil d'altitudes de sécurité correspondant à la trajectoire latérale reçue, en utilisant la base de données 7 d'altitudes de sécurité, de type DPAL1. L'unité de surveillance 4 vérifie la validité de la trajectoire verticale par rapport au profil d'altitudes de sécurité et aux données météorologiques. L'unité de surveillance 4 déclare, le cas échéant, la validité de la trajectoire complète (ou globale) ;
E3/ si la trajectoire complète (à la fois latérale et verticale) du système de gestion de vol 2 active est validée, les fonctions esclave et de sécurité (à savoir l'unité de surveillance 4 et le système de gestion de vol 3 passif) sont resynchronisées sur cette trajectoire complète validée du système de gestion de vol 2 actif ;
E2C/ les systèmes de gestion de vol 2 et 3 calculent des prédictions vers l'avant sur la trajectoire complète synchronisée, de la quantité de carburant disponible à bord de l'aéronef, à partir des bases de données de prédiction 8 et 9 de type DPAL2. Le système de gestion de vol 2 actif envoie le résultat EFOB1 de son calcul de prédiction à l'unité de surveillance 4 ;
E2D/ l'unité de surveillance 4 utilise la base de données de prédiction 10 de type DPAL1 pour calculer les prédictions vers l'avant. L'unité de surveillance 4 valide (ou non) le résultat EFOB1 par rapport à sa propre estimation EFOB3.

L'ensemble de gestion de vol 1, tel que décrit ci-dessus, repose donc sur une architecture comprenant deux systèmes de gestion de vol 2 et 3 (liés ensemble via une configuration maître/esclave) et une unité de surveillance (et de sauvegarde) 4 qui met en oeuvre des surveillances et des sauvegardes, notamment de la trajectoire de vol.

Cette architecture et les opérations mises en oeuvre permettent :
- d'éviter d'avoir à installer par exemple un troisième système de gestion de vol (pour servir de troisième source de données), ce qui serait cher et compliqué ;
- de valider des données calculées par le système de gestion de vol 2 actif à l'aide de données issues de base de données 7 et 10 plus intègres et de resynchroniser le système de gestion de vol 3 passif et l'unité de surveillance 4 sur le système de gestion de vol 2 actif ; et
- d'identifier, le cas échéant, un système de gestion de vol 2 actif défectueux et de permettre de poursuivre l'opération sur le système de gestion de vol 3 restant non en panne.

L'unité de surveillance 4 ne comporte pas de fonction complète de plan de vol et de calcul de trajectoire, à la différence des systèmes de gestion de vol 2 et 3. Elle comporte une mémoire tampon (« buffer » en anglais) qui est périodiquement synchronisée avec le système de gestion de vol 2 actif.

L'unité de surveillance 4 n'est pas en mesure de rafraîchir la trajectoire mémorisée, si les deux systèmes de gestion de vol 2 et 3 tombent simultanément en panne. Elle comporte, toutefois, des logiques pour séquencer la trajectoire mémorisée et le plan de vol mémorisé, des éléments de calcul aptes à calculer des prédictions précises (basées sur la base de données de performance 10 de type DPAL1) et des ordres de guidage le long de la dernière trajectoire de vol synchronisée, reçue du système de gestion de vol 2 actif, ainsi que la capacité d'afficher la trajectoire de secours sur des éléments d'affichage usuels (non représentés) de l'ensemble de gestion de vol 1.

## Revendications

1. Ensemble de gestion de vol d'un aéronef, ledit ensemble de gestion de vol (1) comportant deux systèmes de gestion de vol (2, 3), chacun desdits systèmes de gestion de vol (2, 3) étant configuré pour générer des données comprenant au moins une trajectoire et au moins une prédiction d'un paramètre de l'aéronef (AC), **caractérisé en ce que** l'un (2) desdits systèmes de gestion de vol (2, 3) est dit actif et l'autre (3) desdits systèmes de gestion de vol (2, 3) est dit passif, **en ce que** l'ensemble de gestion de vol (1) comporte, de plus, une unité de surveillance et de sauvegarde (4), l'unité de surveillance et de sauvegarde (4) étant configurée pour réaliser au moins une surveillance d'au moins l'une des données générées par le système de gestion de vol (2) actif afin de vérifier si ladite donnée est valide, et **en ce que** l'ensemble de gestion de vol (1) est configuré pour réaliser, en cas de validation de la donnée surveillée, une synchronisation de l'unité de surveillance et de sauvegarde (4) et du système de gestion de vol (3) passif, sur des données dites de synchronisation du système de gestion de vol (2) actif.

2. Ensemble de gestion de vol selon la revendication 1,
**caractérisé en ce qu'**il comporte au moins une première base de données (5, 6) utilisée par les systèmes de gestion de vol (2, 3) pour calculer au moins certaines desdites données, et une seconde base de données (7) utilisée par l'unité de surveillance et de sauvegarde (4) pour réaliser la surveillance, ladite seconde base de données (7) présentant une intégrité plus importante que ladite première base de données (5, 6).

3. Ensemble de gestion de vol selon l'une des revendications 1 et 2, **caractérisé en ce que** le système de gestion de vol (2) actif est configuré pour calculer une trajectoire latérale, en fonction au moins d'un plan de vol de référence et de données météorologiques, et **en ce que** l'unité de surveillance et de sauvegarde (4) est configurée pour vérifier la validité de ladite trajectoire latérale, par rapport aux données météorologiques.

4. Ensemble de gestion de vol selon l'une quelconque des revendications 1 à 3,
**caractérisé en ce que** le système de gestion de vol (2) actif est configuré pour calculer une trajectoire verticale le long d'une trajectoire latérale, en fonction d'un profil d'altitudes de sécurité dépendant de la trajectoire latérale et de données météorologiques, et **en ce que** l'unité de surveillance et de sauvegarde (4) est configurée pour vérifier la validité de ladite trajectoire verticale, par rapport à des données météorologiques et à un profil d'altitudes de sécurité extrait d'une base de données d'altitudes de sécurité (7).

5. Ensemble de gestion de vol selon l'une quelconque des revendications précédente,
**caractérisé en ce que** le système de gestion de vol (2) actif est configuré pour calculer une première prédiction de carburant à bord de l'aéronef, le long d'une trajectoire latérale et d'une trajectoire verticale validées, à partir de données issues d'une première base de données (8), **en ce que** l'unité de surveillance et de sauvegarde (4) est configurée pour calculer une seconde prédiction de carburant à bord de l'aéronef, le long de ladite trajectoire latérale et de ladite trajectoire verticale validées, à partir de données issues d'une seconde base de données (10), et **en ce que** l'unité de surveillance et de sauvegarde (4) est configurée pour vérifier la validité de ladite première prédiction de carburant à bord de l'aéronef, par rapport à ladite seconde prédiction de carburant à bord de l'aéronef.

6. Ensemble de gestion de vol selon l'une quelconque des revendications précédentes,
**caractérisé en ce qu'**il est configuré pour réaliser une synchronisation de l'unité de surveillance et de sauvegarde (4) ainsi que du système de gestion de vol (3) passif sur au moins l'une des données de synchronisation suivantes du système de gestion de vol (2) actif :
- un plan de vol ;
- une trajectoire latérale et une trajectoire verticale validées.

7. Ensemble de gestion de vol selon l'une quelconque des revendications précédentes,
**caractérisé en ce qu'**il comprend des moyens de commutation configurés pour, en cas de panne du système de gestion de vol (2) actif ou en cas de détection par l'unité de surveillance et de sauvegarde (4) d'une trajectoire active non valide, générer une commutation consistant à rendre actif le système de gestion de vol (3) passif et à rendre passif le système de gestion de vol (2) actif.

8. Ensemble de gestion de vol selon l'une quelconque des revendications précédentes,
**caractérisé en ce que** les deux systèmes de gestion de vol (2, 3) sont hébergés dans des premier et deuxième équipements différents d'un même premier type, et **en ce que** l'unité de surveillance et de sauvegarde (4) est hébergée dans un troisième équipement différent desdits premier et deuxième équipements, ledit troisième équipement étant d'un second type différent dudit premier type.

9. Ensemble de gestion de vol selon l'une quelconque des revendications précédentes,
**caractérisé en ce que** les deux systèmes de gestion de vol (2, 3) et l'unité de surveillance et de sauvegarde (4) sont configurés pour déterminer, chacun, des ordres de guidage, lesdits ordres de guidage étant transmis à un système utilisateur.

10. Ensemble de gestion de vol selon l'une quelconque des revendications précédentes,
**caractérisé en ce que** l'unité de surveillance et de sauvegarde (4) est configurée pour pouvoir afficher une trajectoire dite de secours.

11. Procédé de surveillance d'un ensemble de gestion de vol (1) comportant deux systèmes de gestion de vol (2, 3) dont l'un est actif et l'autre est passif, et une unité de surveillance et de sauvegarde (4),
**caractérisé en ce qu'**il comprend au moins les étapes successives suivantes :
- une étape (E1) de génération de données comprenant au moins une trajectoire et au moins une prédiction d'un paramètre de l'aéronef (AC), mise en oeuvre au moins par le système de gestion de vol (2) qui est actif ;
- une étape de surveillance (E2), mise en oeuvre par l'unité de surveillance et de sauvegarde (4), consistant à réaliser au moins une surveillance d'au moins l'une des données générées par le système de gestion de vol (2) actif afin de vérifier si ladite donnée est valide ; et
- une étape de synchronisation (E3) consistant à réaliser, en cas de validation de la donnée surveillée, une synchronisation de l'unité de surveillance et de sauvegarde (4) et du système de gestion de vol (3) passif, sur des données dites de synchronisation du système de gestion de vol (2) actif.

12. Procédé selon la revendication 11,
**caractérisé en ce que** :
- l'étape (E1) de génération de données consiste à calculer une trajectoire latérale, en fonction au moins d'un plan de vol de référence et de données météorologiques ; et
- l'étape de surveillance (E2) consiste à vérifier la validité de ladite trajectoire latérale, par rapport aux données météorologiques.

13. Procédé selon l'une des revendications 11 et 12,
**caractérisé en ce que** :
- l'étape (E1) de génération de données consiste à calculer une trajectoire verticale le long d'une trajectoire latérale, en fonction d'un profil d'altitudes de sécurité dépendant de la trajectoire latérale et de données météorologiques ; et
- l'étape de surveillance (E2) consiste à vérifier la validité de ladite trajectoire verticale, par rapport à des données météorologiques et à un profil d'altitudes de sécurité extrait d'une base de données d'altitudes de sécurité (7).

14. Procédé selon l'une quelconque des revendications 11 à 14, **caractérisé en ce que** :
- l'étape (E1) de génération de données consiste à calculer une première prédiction de carburant à bord de l'aéronef, le long d'une trajectoire latérale et d'une trajectoire verticale validées, à partir de données issues d'une première base de données (8) ; et
- l'étape de surveillance (E2) consiste vérifier la validité de ladite première prédiction de carburant à bord de l'aéronef, par rapport à une seconde prédiction de carburant à bord de l'aéronef, le long de ladite trajectoire latérale et de ladite trajectoire verticale validées, la seconde prédiction étant calculée à partir de données issues d'une seconde base de données (10).

15. Aéronef,
**caractérisé en ce qu'**il comprend un ensemble de gestion de vol (1) selon l'une quelconque des revendications 1 à 10
